# EUROPEAN PATENT APPLICATION

(11) **EP 2 226 738 A1**
(43) Date of publication of application: **08.09.2010**
(21) Application number: 10155818.7
(22) Date of filing: 08.03.2010
(51) Int. Cl.: G06F 17/50

(54) **Building energy assessment apparatus and method**

(30) Priority: 06.03.2009 GB 0903899
(71) Applicant: ProCenseo Limited, 211 Piccadilly London W1J 9HF (GB)
(72) Inventor: Harrison, Steve, Walkerburn, EH43 5AA (GB); Nissen, Anthony, London, SW6 3PS (GB)
(74) Representative: Harrison Goddard Foote

(57) **Abstract**

A method of determining an energy rating of a building comprising: collating drawing data representative of the building; associating a plurality of items of drawing data to define one or more zones for the building; assigning one or more building objects for the building, the or each building object having a predetermined value of energy performance; retrieving the value of energy performance for the or each defined building object; and generating input data based upon the defined zones and the retrieved energy value of building objects for subsequent calculation of an overall energy rating of the building.

## Description

The present invention relates to a building energy assessment apparatus and a method of determining an energy rating of a building. In particular, but not exclusively, the invention relates to a building energy assessment apparatus which can produce an energy performance certificate for a building.

The European 'Energy Performance of Buildings' Directive (EPBD) 2002/91/EC dated 16 December 2002 requires each EU Member State to promote the improvement of energy efficiency of buildings by laying down standards for assessing performance. This includes the development of a methodology for the calculation of energy performance as well as energy certification of buildings. This has led to a UK National Calculation Methodology (NCM) which must be followed when assessing and certifying buildings. For buildings other than dwellings, the UK Government has provided Simplified Building Energy Model (SBEM) software which can assess energy performance and produce an Energy Performance Certificate (EPC) for a building. This performance is based upon the carbon dioxide emissions of the building taking account of its size and age.

For the SBEM software to be able to assess energy performance, a substantial amount of input data is required. This data includes: the volume of the building; the 'envelope' of the building; information on zones, which can be part of, or the whole of, one or more than one room/area connected by use and/or energy equipment; services that utilise heating, ventilation and air conditioning (HVAC) equipment; the energy ratings of the HVAC equipment; the U values of building elements; details of thermal bridging; and climatic conditions exterior to the building. The data must be inputted in the correct format. And much of this data can only be obtained by on-site inspection of the building. However, if all of this data has been collated and inputted in the correct format, the SBEM software can produce an energy assessment within seconds.

There are currently two approaches to providing the input data required by the SBEM software. The first is to use a basic user interface called iSBEM which allows the inputting of data in a spreadsheet format and outputs the data in the correct format. This is generally adequate for small buildings involving a low number of zones. However, for larger buildings, this approach is complicated, non-intuitive, time consuming and error prone. For example, the user must input the data only in numerical format, which does not allow the user to visualise the building dimensions and zones.

This has led to the second approach in which a number of software providers have provided proprietary software for producing the data required by the SBEM software. These are all based on thermodynamic simulation models of buildings, typically using an iterative calculation method such as Finite Element Analysis (FEA). However, building and verifying the model of a large building is highly complex and can take a number of hours, even when performed by an experienced modeller. And such software, even using modern computers, typically takes hours to process the model and produce the results which form the SBEM input data.

As with the iSBEM manual entry approach, the larger the building (and in particular the greater the number of zones) the greater the complexity. It is therefore usual for the modeller to attempt to minimise the number of zones but such simplification can affect the accuracy of results. Also, the creation and processing of the model requires a lot of initial data which is not actually required to produce an EPC. For example, CAD drawings (or a geometric model of the building which must be initially generated), rather than floor plans in paper form, are required before a simulation model can be created. These are generally only available for new buildings and only floor plans are available (if at all) for older buildings. Also, detailed material properties must be assigned. These are generally available for a particular material, for example glass, but not for a building object such as a particular type of double glazed window. Therefore, the simulation model must calculate from first principles the energy performance of every building object to arrive at the overall energy performance of the building.

The thermodynamic properties of common building objects are known and publicly available such as in databases. However, simulation models cannot take advantage of this; rather the building object must still be modelled.

Both approaches therefore have a number of disadvantages. In particular, the time involved to produce the SBEM input data is considerable. Because of this and for other reasons (for instance, the specification of most laptops is not suitable for running FEA software on complex models), the generation of SBEM input data and subsequent running of the SBEM software to produce an energy assessment cannot be performed on-site by the energy assessor during the initial inspection of the building.

Also, the editing of parameters to show improvements in energy performance if a building object is modified, for instance if the roof is insulated, is again complex and time consuming. In the simulation model, the modified building object must be remodelled and the whole building model reprocessed. Again, this cannot be performed on-site.

Both approaches require at least the geometry of the building as provided by floor plans or CAD drawings. In many cases, these do not exist, or are not easily obtainable, prior to the initial inspection of the building. Floor plans could be produced during this inspection, and means are now available for producing CAD drawings on-site. However, the iSBEM manual entry approach requires a user to manually extract dimensions from the drawings. Simulation models use the line data from CAD drawings to produce complex solid models.

In a CAD drawing, each line is an independent entity and lines are not actually connected or related in a meaningful way, such as the lines that represent a particular room or zone. Lines can be grouped into layers but this is only for display purposes.

It is desirable to provide an apparatus or method which allows the easy input of data to produce data suitable for the SBEM software. It is desirable to provide an apparatus or method which allows the easy input of data, such as the automatic importing of CAD data. It is desirable to provide an apparatus or method which can produce data suitable for the SBEM software substantially faster than existing approaches. It is desirable to provide an apparatus or method which allows an energy assessment of a building to be produced during an on-site inspection. It is desirable to provide an apparatus or method which allows an energy assessment of a building to be produced using building objects rather than using the properties of the materials that form the building objects.

According to a first aspect of the present invention there is provided a method of determining an energy rating of a building comprising:
collating drawing data representative of the building;
associating a plurality of items of drawing data to define one or more zones for the building;
assigning one or more building objects for the building, the or each building object having a predetermined value of energy performance;
retrieving the value of energy performance for the or each defined building object; and
generating input data based upon the defined zones and the retrieved energy value of building objects for subsequent calculation of an overall energy rating of the building.

The term "building object" is intended to include a portion of the building, such as when the building has mixed usage for offices and dwellings.

The term "building object" is intended to mean a common structural component or piece of equipment found in a building which can be given a specific energy performance value and includes composite components or equipment formed from a plurality of materials, structural elements and the like.

The building object may be a particular type and/or age and/or size of structural component or piece of equipment. The building object may be one from the group of a roof, floor or ceiling, window, wall, cladding, door, flooring, insulation layer, boiler, radiator, air conditioning unit, vent, lighting, and office equipment.

The predetermined value of energy performance of the building object may be a U value or the like for the building object. The predetermined value of energy performance may be dependent on the particular type and/or age and/or size of the building object. Alternatively, or in addition, the predetermined value of energy performance may comprise a default value which may be modifiable.

One or more steps of the method may be carried out during on-site inspection of the building. The steps of associating a plurality of items of drawing data, assigning one or more building objects for the building, retrieving the value of energy performance for the or each defined building object, and generating input data may be carried out during on-site inspection of the building. The method may include modifying a default value of a predetermined value of energy performance of a building object and subsequent re-generating of input data during on-site inspection of the building.

The drawing data may be two or three dimensional. The drawing data may comprise a CAD drawing or a solid or wireframe model or a floor plan. The method may include the step of generating the CAD drawing or floor plan. Alternatively, the method may include the step of verifying an existing CAD drawing or floor plan.

The step of generating or verifying a CAD drawing or floor plan may be carried out during on-site inspection of the building. The step of generating the CAD drawing may include using automated means for generating drawing data. The automated means may comprise a laser measurement system.

The method may include the step of importing drawing data, such as automatically importing drawing data.

The step of associating a plurality of items of drawing data may include connecting or otherwise relating the items of drawing data which is treated as a single entity during generation of the input data.

The method may include associating a plurality of items of drawing data to define an envelope for the building. The envelope may represent the interior space for the whole building or for a portion of the building. The step of generating input data may also be based upon the defined envelope.

The step of defining one or more zones of the building may include defining a zone for the whole or part of each particular room or area which is connected by use and/or energy equipment. Therefore, the number of zones is set to the maximum possible. This is not disadvantageous when using the method according to the invention.

The step of retrieving the value of energy performance for the or each defined building object may comprise consulting a database of building objects.

One or more steps of the method may be performed using a computer. Each step of the method may be performed using a computer. The method may be implemented using software provided on the computer or on a remote network such as a file server, intranet or internet.

The method may include accessing a remote network to retrieve the value of energy performance for the or each defined building object. Alternatively, a database of values of energy performance for building objects may be stored on the computer.

The method may include presenting a line drawing of the building on a display unit of the computer. The step of associating a plurality of items of drawing data to define one or more zones for the building may comprise allowing a user to select a plurality of lines to define the or each zone. The user may select each line by clicking a mouse or touching a touch screen or the like.

The method may include scanning a floor plan to collate the drawing data. The step of verifying an existing CAD drawing or floor plan may include resizing by the computer of one or more dimensions of the existing CAD drawing or floor plan.

The method may include providing a user interface on the computer. The method may be performed on a plurality of buildings and data for the building, such as the drawing data and/or the generated input file, is stored on the computer. The method may include providing a directory of the stored data for the building in the form of a geographical map. The method may include allowing a user to search for the data for a particular building using one or more of building address, type, age or size data.

According to a second aspect of the present invention there is provided a building energy assessment apparatus comprising:
means for inputting collated drawing data representative of the building;
user input means adapted to allow a user to associate a plurality of items of drawing data to define one or more zones for the building;
user input means adapted to allow a user to assign one or more building objects for the building, the or each building object having a predetermined value of energy performance;
retrieval means for retrieving the value of energy performance for the or each defined building object; and
a processor for generating input data based upon the defined zones and the retrieved energy value of building objects for subsequent calculation of an overall energy rating of the building.

The drawing data may be two or three dimensional. The drawing data may comprise a CAD drawing or a solid or wireframe model or a floor plan. The apparatus may include means for generating the CAD drawing or floor plan. Alternatively, the apparatus may be adapted to allow a user to input one or more measurements to verify an existing CAD drawing or floor plan.

The apparatus may include automated means for generating drawing data, such as a laser measurement system.

The apparatus may be adapted to connect or otherwise relate items of drawing data and treat the items of drawing data as a single entity during generation of the input data.

The user input means may be adapted to allow a user to associate a plurality of items of drawing data to define an envelope for the building. The processor may be adapted to generate input data also based upon the defined envelope.

The apparatus may comprise a computer. The computer may be adapted using software provided on the computer or on a remote network such as a file server, intranet or internet.

The computer may be adapted to access a remote network to retrieve the value of energy performance for the or each defined building object. Alternatively, a database of values of energy performance for building objects may be stored on the computer.

The computer may include a display unit adapted to present a line drawing of the building on the computer. The computer may be adapted to allow a user to select a plurality of lines to define the or each zone. The computer may include a mouse or touch screen for the selection of each line. The apparatus may include a scanner for scanning a floor plan to collate the drawing data.

The computer may be adapted to provide a user interface on the computer. The computer may be adapted to store data for a plurality of buildings. The computer may be adapted to provide a directory of the stored data for the building in the form of a geographical map. The computer may include a searching tool to allow a user to search for the data for a particular building using one or more of building address, type, age or size data.

Embodiments of the present invention will now be described, by way of example only, with reference to the accompanying drawings in which:
Fig 1 shows a top level diagram of two methods of determining an energy rating of a building according to the prior art; and
Fig 2 shows a top level diagram of a method of determining an energy rating of a building according to the present invention.

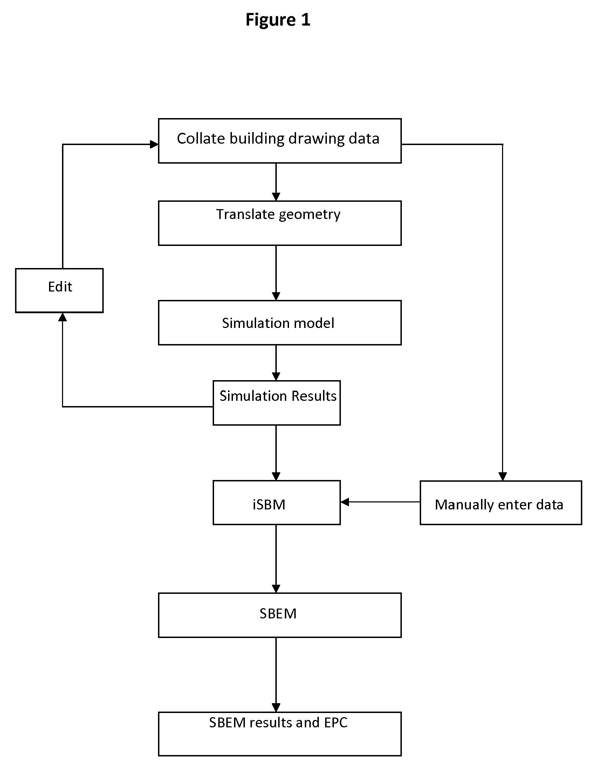

Figure 1 shows two known methods of determining an energy rating of a building.

The method is initiated by first collating drawing data representative of the building. This can be CAD drawing data or floor plan drawings in paper form. The user can elect to manually enter data into the iSBEM software, but this is only really practical for small buildings. Otherwise, geometric data in electronic format for the building must be available. This geometric data is then translated to provide a simulation model.

The simulation model is run and the results analysed. If any aspect of the model requires to be modified, the user must typically make the modification to the geometric data. The results may be inputted to the iSBEM software which will produce an input file for the SBEM software which can then be run to produce an EPC. Typically, the time taken for these steps is around four days.

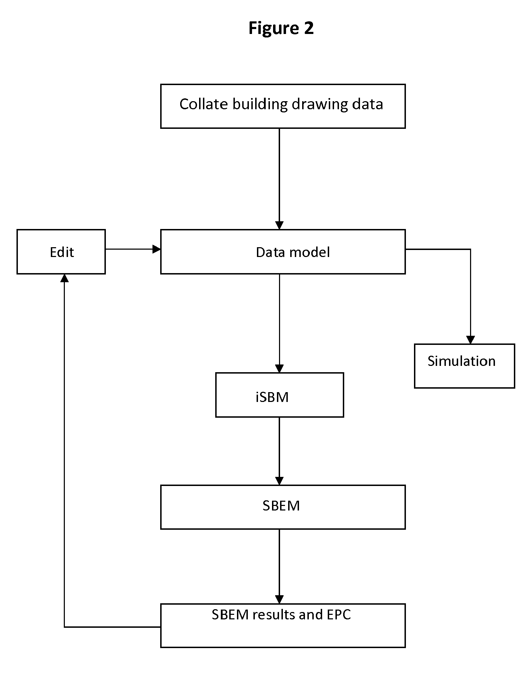

Figure 2 shows a method of determining an energy rating of a building according to the invention.

Many steps of the method are typically performed on a computer, which may be a laptop or tablet pc such that it is transportable. The computer can be connected to the internet. The computer includes a graphic user interface.

The method can be performed on a number of buildings, and the computer is adapted to store data for each building. The user interface provides a map directory of the stored data. For instance, a map of the UK may initially be presented to the user and the user can zoom in to a particular location where the building of interest is located. The user can also search for data for a particular building using the building address, type, age or size and so on.

The method is again initiated by collating drawing data representative of the building, which can be CAD drawing data or drawings in paper form. This data can be automatically imported. If this does not exist, a CAD drawing or floor plan can be created during an on-site inspection of the building. If only paper drawings are available, these can be scanned and inputted into the computer. The computer can be adapted to resize the scanned image according to the inputted dimensions. This may be necessary when paper drawings have been photocopied, as photocopiers often resize images to suit paper size. In any case, geometric building data in electronic form can be easily obtained.

The computer is adapted to take the geometric building data and generate and display a data model without any effort by the user. This simply involves converting line data from separate independent lines to lines which represent the perimeter of an area. The user can define these areas as particular zones. This is done by the user simply clicking on the appropriate lines using a mouse. The computer associates these areas with a particular zone. The data model also allows the user to specify the envelope of the building by selecting the outer lines of the building. Further data can be specified including the HVAC equipment present, and the energy ratings of the HVAC equipment.

The user can also assign a number of building objects for the building. This could be for instance a particular type, age and size of window. Such building objects have a known or typical value of energy performance, such as a U value. When the building object is specified, the known value is retrieved from a database which can be stored on the computer or accessible via the internet. This retrieved value can be modified by the user.

The input data for the SBEM software can then be generated based upon inputted information such as the defined zones and the retrieved energy values of building objects. The SBEM software can then be run to obtain an overall energy rating of the building. Typically, the whole method can be carried out within a few hours (the actual processing by the computer takes seconds). Therefore, the method can be carried out during the on-site inspection of the building.

Since the method is so rapid, a user can obtain the energy performance of the building (the SBEM results) and then elect to modify parameters to determine the impact this has on energy performance. Results are easier to compare since the user is directly comparing the SBEM results rather than simulation results.

Various modifications can be made without departing from the scope of the present invention.

## Claims

1. A method of determining an energy rating of a building comprising:
collating drawing data representative of the building;
associating a plurality of items of drawing data to define one or more zones for the building;
assigning one or more building objects for the building, the or each building object having a predetermined value of energy performance;
retrieving the value of energy performance for the or each defined building object; and
generating input data based upon the defined zones and the retrieved energy value of building objects for subsequent calculation of an overall energy rating of the building.

2. A method as claimed in Claim 1, wherein the building object comprises a particular type or age or size of a structural component or piece of equipment, and wherein the predetermined value of energy performance is dependent on the particular type or age or size of the building object.

3. A method as claimed in any preceding claim, wherein the predetermined value of energy performance of the building object comprises a U value for the building object.

4. A method as claimed in any preceding claim, wherein one or more steps of the method are performable during on-site inspection of the building.

5. A method as claimed in any preceding claim, wherein the predetermined value of energy performance comprises a default value which is modifiable, and wherein the method includes modifying a default value of a predetermined value of energy performance of a building object and subsequent re-generating of input data during on-site inspection of the building.

6. A method as claimed in any preceding claim, wherein the drawing data comprises a CAD drawing or a solid or wireframe model or a floor plan.

7. A method as claimed in claim 6, including the step of generating the CAD drawing or floor plan or verifying an existing CAD drawing or floor plan.

8. A method as claimed in claim 7, wherein the step of generating or verifying a CAD drawing or floor plan is carried out during on-site inspection of the building.

9. A method as claimed in any preceding claim, wherein the step of associating a plurality of items of drawing data includes connecting or otherwise relating the items of drawing data which are treated as a single entity during generation of the input data.

10. A method as claimed in any preceding claim, including associating a plurality of items of drawing data to define an envelope for the building.

11. A method as claimed in any preceding claim, wherein one or more steps of the method are performed using a computer, and wherein the method is implementable using software provided on the computer or on a remote network.

12. A method as claimed in any preceding claim, including accessing a remote network to retrieve the value of energy performance for the or each defined building object.

13. A method as claimed in any preceding claim, wherein the step of associating a plurality of items of drawing data to define one or more zones for the building comprises allowing a user to select a plurality of lines to define the or each zone.

14. A method as claimed in any preceding claim, include scanning a floor plan to collate the drawing data, and resizing one or more dimensions of the floor plan.

15. A method as claimed in any preceding claim, including providing a directory of stored data for one or more buildings in the form of a geographical map.
